# EUROPEAN PATENT APPLICATION

(11) **EP 1 637 505 A1**
(43) Date of publication of application: **22.03.2006**
(21) Application number: 04425702.0
(22) Date of filing: 20.09.2004
(51) Int. Cl.: C03B 9/38

(54) **Mould support system with associated cooling device for a hollow glassware forming machine**

(71) Applicant: BDF HOLDING S.p.A., 36100 Vicenza (IT)
(72) Inventor: Sasso, Daniele, 36100 Vicenza (IT); Gennari, Marco, 36100 Vicenza (IT)
(74) Representative: Notaro, Giancarlo

(57) **Abstract**

In a system for supporting moulds in a machine for forming hollow articles made of glass, each mould (8) is associated to an air-distribution body (13) for distributing cooling air within passages (11, 12) made in the body of the mould. Each air-distribution body (13) receives the cooling air from a supply system including a telescopic duct (16), which has its ends connected by means of ball-and-socket joints to a vertical inlet duct (14), fixed to a supporting structure, and to an end duct (15), fixed to the structure of the air-distribution body (13). The system envisages fast-coupling means for connection between the aforesaid end duct (15) and the structure of the air-distribution body (31).

## Description

The present invention relates in general to the field of machines for forming hollow articles made of glass. The invention relates more in particular to a mould-supporting system, with corresponding cooling device, for a machine of the type specified above. Even more in particular, the invention relates to a mould-supporting system of the type comprising:
- a supporting structure;
- a pair of mould-bearing arms, mounted so that they can rotate about a vertical axis on the aforesaid supporting structure between a position of opening and a position of closing of the moulds;
- means for controlling the displacement of the mould-bearing arms between the aforesaid position of opening and the aforesaid position of closing of the moulds;
- a pair of supports for the moulds, one mounted on one of the two mould-bearing arms, and the other on the other arm;
- at least one pair of moulds, each one of said moulds being supported in a suspended condition on each one of said supports and said moulds being designed to define, in their aforesaid closed condition, at least one closed cavity for forming an article made of glass;
- an air-distribution body for distributing cooling air connected to each mould and having an internal cavity for supply of the cooling air that is in communication with passages for the cooling air that are made in the body of the respective mould; and
- a supply system for supplying cooling air to each air-distribution body, designed to ensure said supply also during movement of the mould-bearing arms between the position of opening and the position of closing of the moulds, said supply system comprising, for each air-distribution body:

- a vertical inlet duct carried by the aforesaid supporting structure;
- a vertical end duct connected to said air-distribution body; and
- an intermediate telescopic duct, having its opposite ends in communication with said inlet duct and said end duct via respective ball-and-socket joints.

A system of the type referred to above is, for example, described and illustrated in the document No. EP 0 576 745 B1 or in the document No. EP 895 509 B1. The purpose of the present invention is to provide a system of the type specified above that will be improved from the standpoint of ease and rapidity of installation and of transformation of the system according to the production requirements.

With a view to achieving said purpose, the subject of the present invention is a system, which has all the characteristics that have been referred to above and is moreover characterized in that each air-distribution body and the aforesaid end duct for supply of the air associated thereto are provided with means for their mutual fast coupling.

In the present description, and in the ensuing claims, the term "fast-coupling means" is meant to indicate any device, also of a type in itself known in the art, which will enable installation and mutual disassembly of the two parts with a simple and fast operation, unlike what it is, instead, possible to do in the case, for example, of a normal connection by means of screws.

Further advantageous and preferred characteristics of the invention are specified in the annexed claims.

A preferred embodiment of the invention will now be described with reference to the annexed drawings, which are provided purely by way of non-limiting example and in which:
- Figure 1 is a perspective view of a preferred embodiment of the system according to the invention, partially sectioned and with some parts removed;
- Figures 2, 3 are perspective views from above and from beneath of the system for supplying cooling air associated to each mould;
- Figures 4, 5 are perspective views of two details of the supply system illustrated in Figures 2 and 3; and
- Figure 6 illustrates a variant of Figure 1, with some parts removed for reasons of clarity.

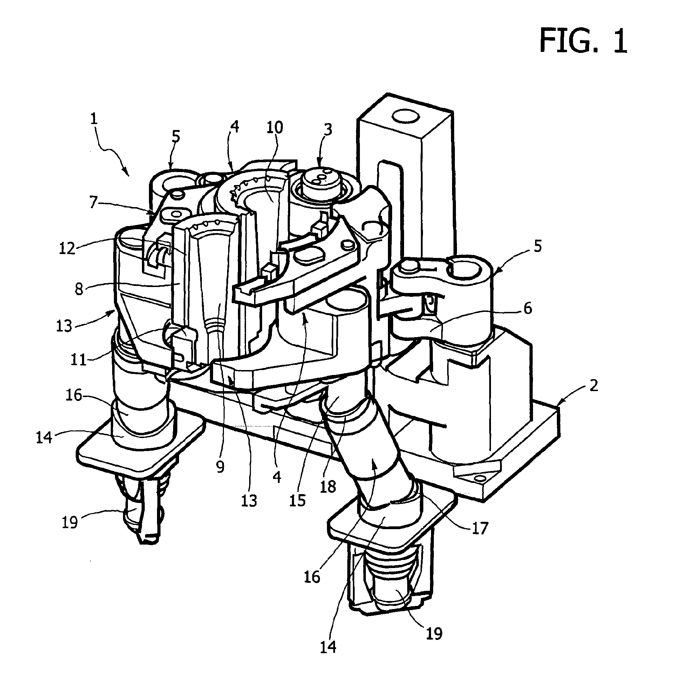

With reference to Figure 1, the number 1 indicates, as a whole, a system for supporting moulds, in particular for the blocker and for the finishing mould of a machine for forming hollow articles made of glass. The system 1 comprises a supporting structure 2 having a pin with vertical axis 3 defining a common vertical axis, on which two mould-bearing arms 4 are mounted oscillating. The mould-bearing arms 4 are displaceable between a position of opening of the moulds and a position of closing of the moulds by control means that include, for each arm 4, a rotating shaft 5, which can be set in rotation about its axis, for example by means of a fluid-driven cylinder (not illustrated) and a respective lever transmission (not illustrated either). Each shaft 5 is connected to the respective mould-bearing arm 4 by means of an articulated-lever system 6, so that an oscillation of the shaft 5 about its axis causes a displacement of the respective mould-bearing arm 4 between the position of opening and the position of closing of the moulds.

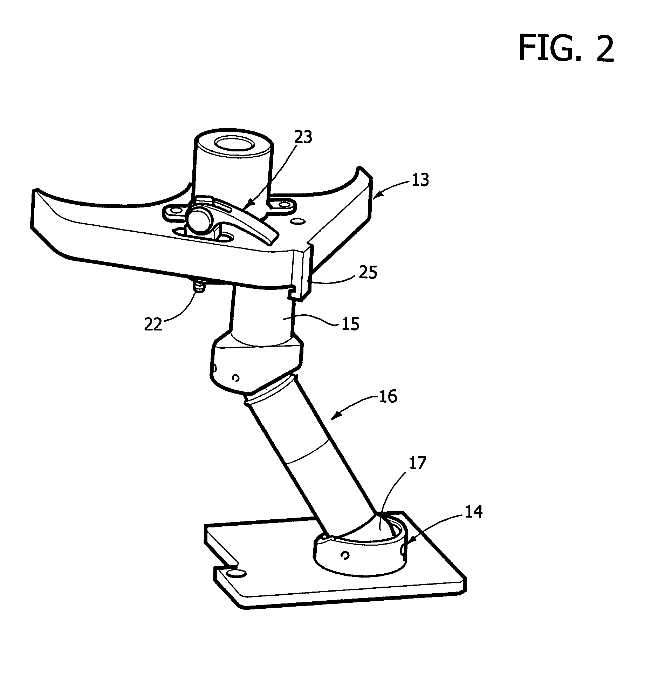

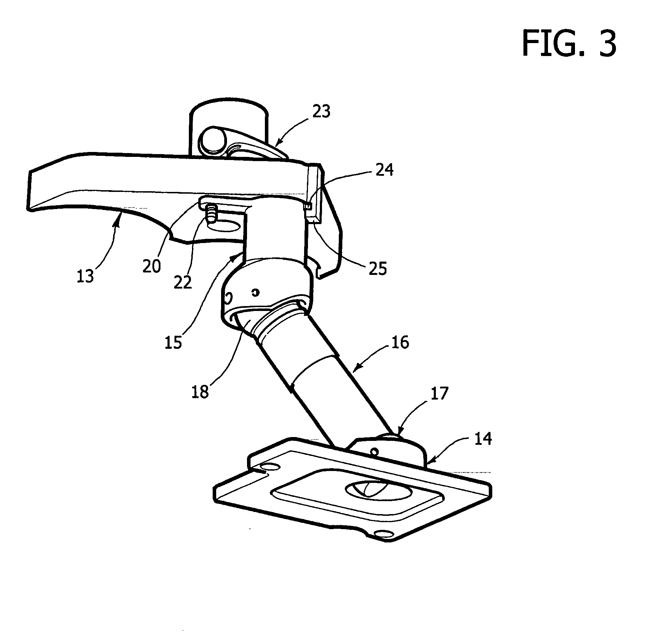

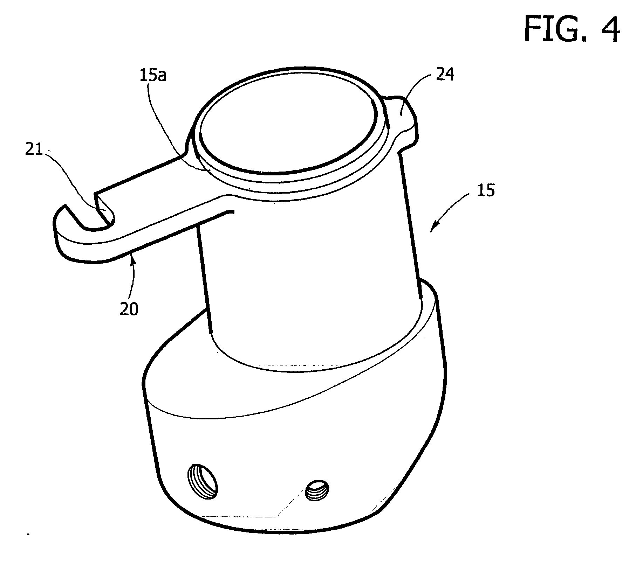

Fixed to each mould-bearing arm 4 is a supporting insert 7, on which there is supported, in a suspended condition, a respective mould body 8 defining two half-cavities 9, 10, which, in the closed condition of the moulds, constitute the cavities of the blocker and of the finishing mould. Each mould body 8 has, in its wall surrounding the mould cavity, axial passages 11, designed to be traversed by cooling air. More precisely, the system of circulation of the cooling air within each mould body 8 envisages a horizontal inlet 12, from which the cooling air is conveyed either towards the top end or towards the bottom end of the mould body 8 (as indicated by the dashed arrows in Figure 1). It is also possible to envisage that the cooling air will enter from an inlet provided at the bottom end of the mould body 8, in which case it traverses the mould body 8 vertically from the bottom upwards. Figure 1, as well as Figures 2 and 3 show the system for supplying cooling air associated to each mould body 8. Associated to each body 8 is, first of all, an air-distribution body 13, defining an internal cavity for the supply of air within the passages 12, 11 of the mould. The system for supplying air to each air-distribution body 13 comprises a vertical inlet duct 14, fixed with respect to the supporting structure 2, a vertical end duct 15, connected rigidly to the air-distribution body 13, and an intermediate telescopic duct 16, which is in communication at its opposite ends with the inlet duct 14 and with the end duct 15 via respective ball-and-socket joints 17, 18 (see Figures 3 and 4). Provided at the inlet end of the duct 14 is a timing valve 19. The supply system with telescopic duct 16 and ball-and-socket joints 17, 18 enables assurance of supply of the cooling air to the moulds also during the movement of opening and/or of closing of the mould-bearing arms.

According to the invention, the end duct 15 is connected rigidly to the respective air-distribution body 13 by means of a fast-coupling system (not visible in Figure 1).

In the case of the embodiment illustrated, the end duct 16 is provided, at the top ends, with a plate 20 with a recess 21 for the engagement of a pin 22 (Figure 3), which traverses the structure of the air-distribution body 13 and can be tensioned by means of an eccentric-lever system 23 of the type in itself known, used for example for fast installation of the wheels of a bicycle. Screwed on the bottom end of the pin 21, which is threaded, is a nut that functions as bottom contrast element for the lever 20. When the lever 23 of the fast-coupling system is set in tension, the aforesaid nut is pressed against the lever 20 so as to tighten the air-distribution body 13 between a top contrast element associated to the lever 23 and the bottom lever 20.

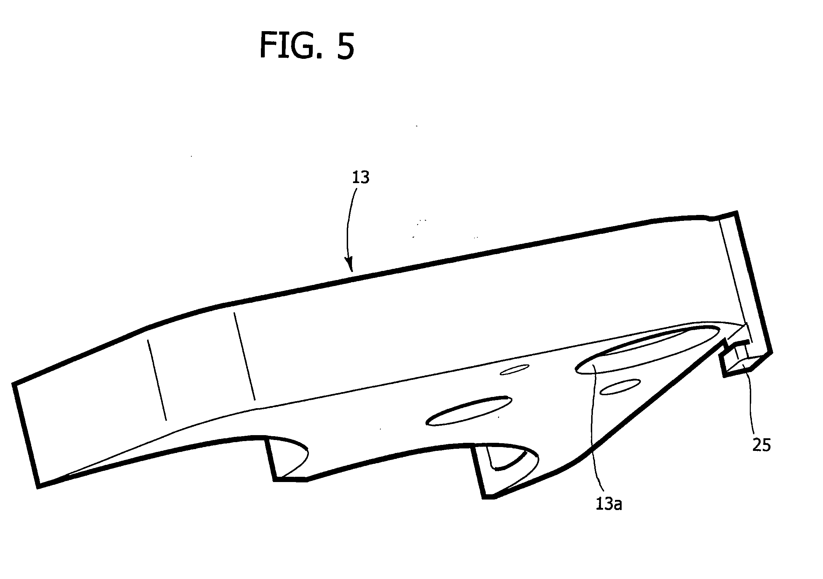

For better reliability of the connection, the top end of the duct 15 has, in a position diametrally opposite to the lever 20, a projecting tooth 24, which engaged within an appendage with undercut 25 projecting at the bottom from the air-distribution body 13 (Figure 5). Furthermore, the duct 15 has, at the top end, a portion of slightly smaller diameter 15a to facilitate its centring within a corresponding seat 13a (Figure 5), provided in the air-distribution body 13.

Thanks to the characteristics indicated above, the connection of the system for supplying air to the air-distribution body associated to the mould is extremely simple, easy, and fast to carry out. In the use of the system illustrated above it is thus possible to carry out change of equipment with extreme ease, i.e., replace the arms 4, together with the respective supports 7, and the moulds 8, together with the associated air-distribution bodies 13, then connecting the two systems for supplying the cooling area via the fast coupling to the new equipment installed. In systems currently in use, the replacement of the equipment referred to above entails relatively long times, owing to the need to intervene on screw connections and also to the difficulty of finding a correct alignment between the tubes of the telescopic duct (which, in the aforesaid known solutions, is dismantled at the moment of disassembly). It should also be taken into account that, during the procedure of installation, the operator does not have any possibility of viewing the operation from the side of the mould, but only from above; consequently, in the known systems he is able to proceed to the manoeuvre of alignment of the components of the telescopic duct only by successive attempts.

It is also important to remember that the weight of a mould-bearing arm, complete with the corresponding supporting insert, can arrive at approximately 30-40 kg, and it is consequently difficult to carry out the aforesaid operation of installation manually. In the case of the invention, the fast-coupling device 23 is carried by the air-distribution body 13 and enables coupling with the supply system to be carried out in an extremely easy and fast way.

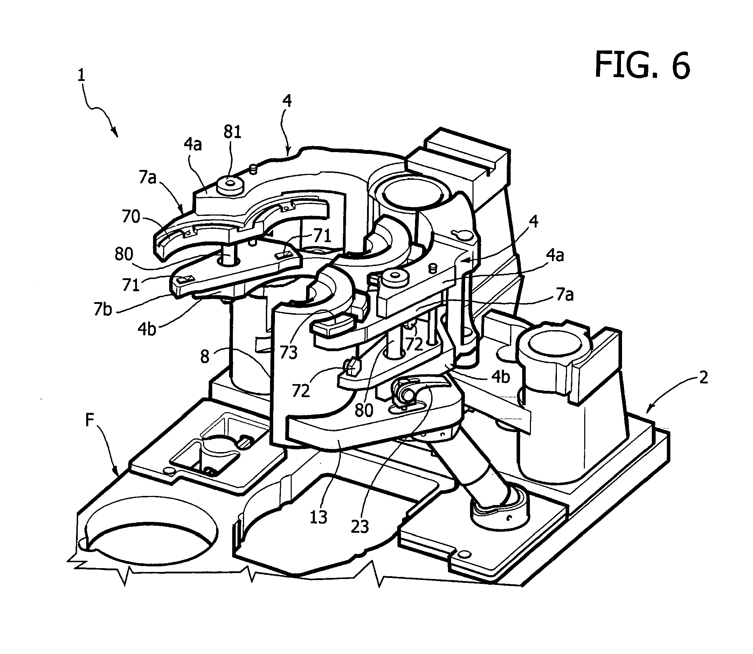

Figure 6 shows a variant of Figure 1, in which some parts have been removed for reasons of clarity. Said figure shows clearly that each mould-bearing arm 4 is fork-shaped, with a top branch 4a and a bottom branch 4b. Also the inserts 7 envisage a top insert 7a and a bottom insert 7b, which in the case of Figure 6 are mounted within the two branches 4a, 4b instead of on the outside. In addition, Figure 6 shows clearly that the inserts 7a, 7b have seats 70, 71 for the resting of projections 73, and bolts 72 connected to the body of the moulds 8, for support, in a suspended condition, of the moulds 8 on the inserts 7. The pairs of arms 4a, 4b and inserts 7a, 7b are traversed by vertical pins 80, each having a top head 81 and a bottom threaded end engaged by a nut. Figure 6 also shows clearly the frame F of the machine, fixed to which is the supporting structure 2.

Of course, without prejudice to the principle of the invention, the details of construction and the embodiments may vary widely with respect to what is described and illustrated herein purely by way of example, without thereby departing from the field of the present invention.

## Claims

1. A mould-supporting system with corresponding cooling device for a machine for forming hollow articles made of glass, comprising:
- a supporting structure(2);
- a pair of mould-bearing arms (4), mounted so that they can rotate about a vertical axis on the aforesaid supporting structure (2) between a position of opening and a position of closing of the moulds;
- means (5) for controlling the displacement of the mould-bearing arms (4) between the position of opening and the position of closing of the moulds;
- a pair of supports (7) for the moulds, each one mounted on each of the two mould-bearing arms (4);
- a pair of moulds (8), which are supported in a suspended condition, one on each of said supports for the moulds (7), and are designed to define at least one closed forming cavity in the aforesaid closed condition of the moulds;
- a cooling-air-distribution body (13) connected to each mould (8) and having an internal cavity for supply of the cooling air that is in communication with passages (11, 12) for the cooling air that are made in the body of the respective mould (8); and
- a supply system for supplying cooling air to said air-distribution body (13), designed to ensure said supply also during movement of the mould-bearing arms (4) between the position of opening and the position of closing of the moulds, said supply system comprising:
- a vertical inlet duct (14) carried by the supporting structure (2);
- a vertical end duct(15) connected to said air-distribution body (13); and
- an intermediate telescopic duct (16), having its opposite ends in communication one with said inlet duct (14) and one with said end duct (15) via respective ball-and-socket joints (17, 18),
said system being **characterized in that** said air-distribution body (13) and said end duct (15) are provided with means for fast mutual coupling.

2. The system according to Claim 1, **characterized in that** said fast-coupling means comprise a system of tensioning by means of an eccentric lever (23) of a type similar to what is used for fast removal of bicycle wheels.

3. The system according to Claim 1, **characterized in that** the aforesaid end duct (15) has an end portion of reduced diameter to facilitate centring of said end duct (15) within a corresponding seat made in the air-distribution body (13).

4. The system according to Claim 1, **characterized in that**, in addition to said fast-coupling means, said air-distribution body (13) is provided with of an appendage with undercut (25), which can be engaged by a projecting tooth (24) set at the top end of said end duct (15).

5. The system according to Claim 2, **characterized in that** said tensioning system comprises a pin (22) traversing the air-distribution body (13) and a plate (20) projecting radially from the top end of said end duct (15).

6. The system according to Claim 1, **characterized in that** the air-distribution body is designed to be mounted with its internal cavity in communication with the bottom ends of axial passages (12) made vertically through the body of the mould (8) or, alternatively, in communication with an inlet passage (12) made in the body of the mould at a distance from both its top and bottom ends, in which case the air at inlet to the body of the mould traverses the aforesaid axial passages (11) both in the direction of its top end and in the direction of its bottom end.
